# EUROPEAN PATENT SPECIFICATION

(11) **EP 3 045 340 B1**
(45) Date of publication and mention of the grant of the patent: **06.02.2019**
(21) Application number: 15202055.8
(22) Date of filing: 22.12.2015
(51) Int. Cl.: B60R 21/055, B60K 35/00, B60K 37/04, B60R 11/02

(54) **ON-VEHICLE DISPLAY DEVICE**
ANZEIGEVORRICHTUNG FÜR EIN FAHRZEUG
DISPOSITIF D'AFFICHAGE POUR UN VEHICULE

(30) Priority: 13.01.2015 JP 2015003892
(43) Date of publication of application: 20.07.2016
(73) Proprietor: Alpine Electronics, Inc., Tokyo (JP)
(72) Inventor: Otani, Tomonori, Iwaki-city, Fukushima (JP); Takahoso, Hitoshi, Iwaki-city, Fukushima (JP)
(74) Representative: Schmitt-Nilson Schraud Waibel Wohlfrom Patentanwälte Partnerschaft mbB

(56) References cited:
- EP-A1- 2 676 847
- DE-A1-102013 003 942

## Description

The present invention relates to an on-vehicle display device in which, for example, a liquid crystal display panel is mounted on a supporting member. More particularly, the present invention relates to an on-vehicle display device that is formed such that, when an external force acts upon a supporting member and a fracture surface is produced, the fracture surface is not exposed in a dangerous direction.

With regard to recent on-vehicle display devices, a type in which a display panel is set in a raised position upwardly from an instrument panel or a dashboard, and a type in which, by a mechanism using a motor, a display panel is set in a raised position upwardly from an instrument panel or a dashboard only when it is used are used. In on-vehicle display devices of such types, when the body of a human being collides with the display panel during an accident or the like, the supporting member that supports the display panel may be fractured.

In an on-vehicle display device described in Japanese Unexamined Patent Application Publication No. 2014-4857, which discloses the preamble of claim 1, an easily fracturing portion is formed at a supporting plate portion that supports a display panel, and the supporting plate portion can be fractured starting from the easily fracturing portion when shock is applied. Two end portions of each of two tension coil springs are secured to the supporting plate portion with the easily fracturing portion being interposed between the two tension coil springs. By elastic forces of the tension coil springs, an upper region of the supporting plate portion that has been fractured by the shock returns to its original upright position. This prevents a fracture surface of the supporting plate portion from facing an occupant.

In the on-vehicle display device described in Japanese Unexamined Patent Application Publication No. 2014-4857, when the supporting plate portion is fractured, the two tension coil springs are bent, and, by restoring elastic forces thereof, the separated upper region is restored to the upright position. However, although the tension coil springs exhibit strong elastic restoring forces with respect to stretching force, the elastic restoring forces with respect to bending force is very weak. On the other hand, since the mass of the display panel and the mass of the upper region that holds the display panel are large, it is difficult to restore the upper region to the upright position by the elastic restoring forces in a bending direction of the tension coil springs.

To overcome such existing problems mentioned above, it is an object of the present invention to provide an on-vehicle display device having a structure in which, when a supporting member on which a display panel is mounted is fractured due to shock, a portion that supports the display panel tends to be restored to an orientation state that is close to its original orientation state.

The invention relates to an on-vehicle display device according to claim 1.

According to an aspect of the present invention, there is provided an on-vehicle display device including a display panel and a supporting member on which the display panel is mounted, the supporting member including a panel supporting portion that supports the display panel and a base portion that supports the panel supporting portion. In the on-vehicle display device, the supporting member further includes a preferential fracturing portion that is formed between the panel supporting portion and the base portion. Preferably it has lower bending strength than the panel supporting portion and the base portion. In addition, a connecting metallic plate that extends from the base portion to the panel supporting portion is provided at the supporting member, and the connecting metallic plate is secured to the base portion at a first securing section, is secured to the panel supporting portion at a second securing section, and is elastically deformable in a bending direction. Further, the connecting metallic plate includes a bend portion that reduces a distance between the first securing section and the second securing section.

The on-vehicle display device according to an embodiment of the present invention may be such that, when a force in a direction that moves the first securing section and the second securing section away from each other acts, the bend portion is stretched to allow a distance between the first securing section and the second securing section to increase.

For example, the bend portion may be bent into a V shape. Alternatively, the bend portion may be curved in a convex form.

According to an embodiment of the on-vehicle display device of the present invention, the bend portion is formed closer to the first securing section than the preferential fracturing portion.

Further, according to an embodiment of the on-vehicle display device of the present invention, the second securing section includes a screw securing portion where the connecting metallic plate is secured to the panel supporting portion and a protrusion-and-recess fitting portion where a protrusion of the panel supporting portion is fitted to a fitting hole of the connecting metallic plate.

According to aspects of the present invention, when shock is applied to the panel supporting portion that supports the display panel and the supporting member is fractured at the preferential fracturing portion, the connecting metallic plate stretches at the bend portion, so that the panel supporting portion is movable in a direction away from the base portion. Therefore, the connecting metallic plate is less likely to be cut, so that the panel supporting portion can be prevented from being separated and driven out. In addition, when the connecting metallic plate that supports the separated panel supporting portion is bent, the panel supporting portion restores itself above the base portion by an elastic restoring force of the connecting metallic plate. Therefore, it is possible to prevent the fracture surface of the preferential fracturing portion from facing the interior of a vehicle, and to make it less dangerous for an occupant.

### BRIEF DESCRIPTION OF THE DRAWINGS

Fig. 1 is an exploded perspective view of an on-vehicle display device using connecting metallic plates according to a first embodiment of the present invention;
Fig. 2 is a partial exploded perspective view of a portion of the on-vehicle display device shown in Fig. 1;
Fig. 3 is a sectional view taken along line III-III of a state in which the on-vehicle display device shown in Fig. 1 is assembled;
Fig. 4 is a sectional view illustrating actions when a panel supporting portion is fractured due to shock acting upon the panel supporting portion;
Fig. 5 is a sectional view of an on-vehicle display device using connecting metallic plates according to a second embodiment of the present invention; and
Fig. 6 is a sectional view of an on-vehicle display device using connecting metallic plates according to a third embodiment of the present invention.

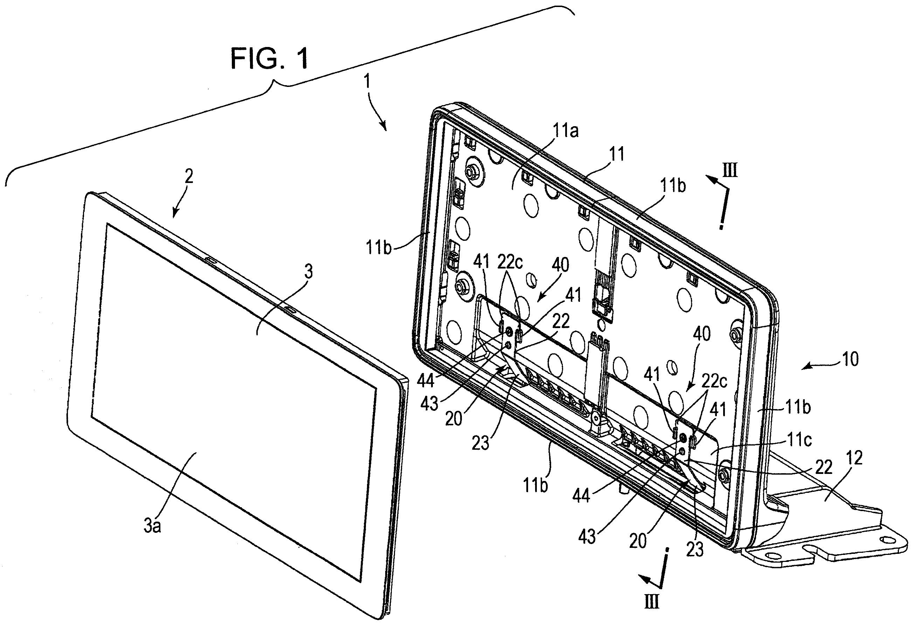

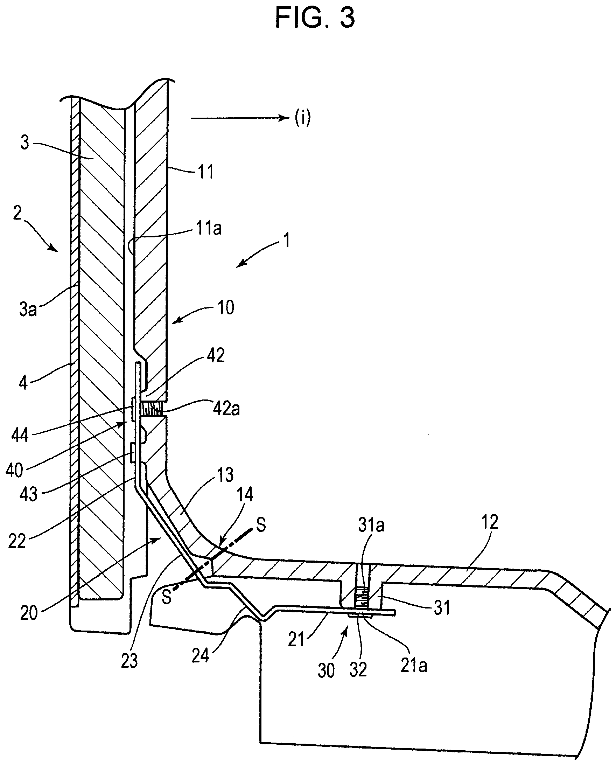

An on-vehicle display device 1 shown in Fig. 1 includes a display panel 2. As shown in the sectional view of Fig. 3, the display panel 2 is a combination of a display cell 3, a backlight, a transparent surface panel 4, and a capacitive touch pad or a resistance change touch pad. The display cell 3 is a color liquid crystal cell or an EL display cell. If a color liquid crystal panel is used, the backlight illuminates the color liquid crystal panel from a back side thereof. The surface panel 4 is disposed in front of a screen 3a of the display cell 3. The touch pad is placed upon the surface panel 4.

The display panel 2 is mounted on a supporting member 10. The supporting member 10 is formed of a metallic material that tends to be fractured when shock is applied thereto. The supporting member 10 is formed by die-cast molding by using, for example, a magnesium alloy.

As shown in Fig. 3, in the supporting member 10, a panel supporting portion 11 and a base portion 12 are integrated with each other. A curved portion (connecting portion) 13 is formed at an intermediate portion between the panel supporting portion 11 and the base portion 12 so as to be integrated therewith. The panel supporting portion 11 is set in a raised position with respect to the base portion 12.

As shown in Fig. 1, the panel supporting portion 11 includes a mounting surface 11a, which is a front surface, and edges 11b that rise towards the front from four sides along a periphery of the mounting surface 11a. The mounting surface 11a is integrated with the edges 11b. The display panel 2 is set on the mounting surface 11a, which is the front surface of the panel supporting portion 11, with the four sides along the periphery of the mounting surface 11a being surrounded by the edges 11b. The display panel 2 is secured to the panel supporting portion 11 with, for example, securing screws or securing metal parts.

The base portion 12 is set on a dashboard or an instrument panel in the interior of a vehicle, the panel supporting portion 11 is secured in a raised position, and the screen 3a of the display panel 2 faces the interior of the vehicle. Alternatively, the base portion 12 is supported by a raising-and-lowering mechanism that is provided, for example, in the interior of a dashboard; the base portion 12 is accommodated in the interior of the dashboard when the on-vehicle display device 1 is not used; and the panel supporting portion 11 and the display panel 2 are raised by the raising-and-lowering mechanism and are set in a raised position on the dashboard when the on-vehicle display device 1 is used.

As shown in Fig. 3, a preferentially fracturing portion 14 is provided at the curved portion 13 of the supporting member 10. The thickness of a portion of the preferentially fracturing portion 14 is less than the thicknesses of other regions. Alternatively, the preferentially fracturing portion 14 may have intermittently formed through holes. The supporting member 10 is such that, when shock is applied to the panel supporting portion 11, the supporting member 10 is capable of being fractured at the preferentially fracturing portion 14.

Referring to Figs. 1 and 3, a plurality of connecting metallic plates 20 (two in the embodiment) are mounted on the supporting member 10. Each connecting metallic plate 20 is formed of an elastic metallic material that exhibits a relatively large elastic restoring force in a bending direction. Each connecting metallic plate 20 is desirably formed of what is called a leaf spring metallic material, such as a stainless-steel spring steel plate and a phosphor bronze plate.

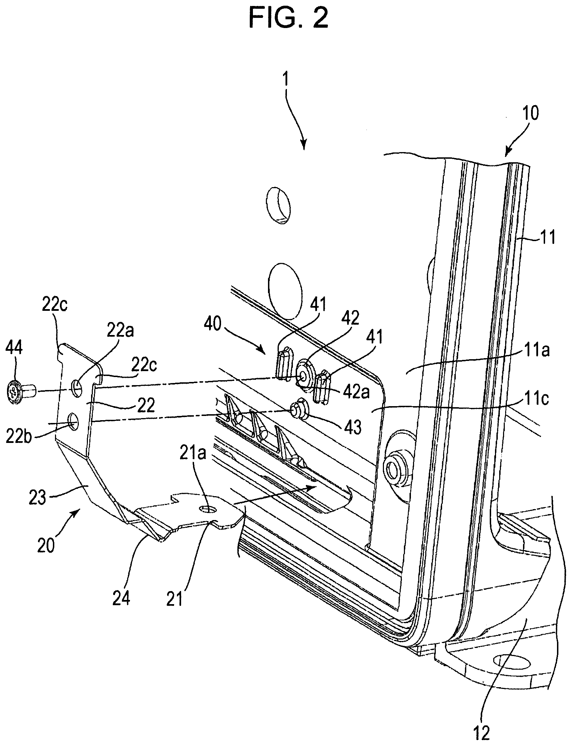

Referring to Fig. 2, each connecting metallic plate 20 according to the first embodiment of the present invention includes a first securing portion 21 and a second securing portion 22. Each first securing portion 21 has a securing hole 21a for securing the corresponding connecting metallic plate 20 to the base portion 12. Each second securing portion 22 has a securing hole 22a and a fitting hole 22b for securing the corresponding connecting metallic plate 20 to the panel supporting portion 11.

Each connecting metallic plate 20 includes an intermediate portion 23 between the first securing portion 21 and the second securing portion 22. Each intermediate portion 23 includes a bend portion 24. Each bend portion 24 is formed by deforming a metallic plate such that the distance between the securing hole 21a of the first securing portion and the securing hole 22a of the second securing portion, that is, the distance along a plate surface of the metallic plate excluding the bend portion 24, is reduced. When each connecting metallic plate 20 in a free state is pulled in a direction in which the securing hole 21a and the securing hole 22a move away from each other, it is possible to increase the distance between the securing hole 21a and the securing hole 22a in a direction along the plate surface as a result of elastic deformation of the bend portion 24.

Referring to Figs. 2 and 3, in the first embodiment, each bend portion 24 is V-shaped. However, as in other embodiments described later, each bend portion 24 need not be V-shaped.

As shown in Fig. 3, a downwardly extending securing base 31 is integrated with the base portion 12 of the supporting member 10, and has internally threaded holes 31a. A securing screw 32 is inserted into the securing hole 21a of the first securing portion 21 of each connecting metallic plate 20, and is driven into and tightened in the internally threaded hole 31a, so that each first securing portion 21 is firmly secured to the securing base 31. The securing screws 32, the securing holes 21a, and the internally threaded holes 31a form first securing sections 30 for securing the connecting metallic plates 20 to a lower side of the base portion 12.

As shown in Fig. 2, a slightly inwardly formed securing surface 11c is formed at the mounting surface 11a of the panel supporting portion 11 of the supporting member 10. Two pairs of supporting protrusions 41 and 41 are formed such that the supporting protrusions 41 and 41 of each pair are formed apart from each other in a left-right direction so as to integrally protrude from the securing surface 11c. A securing base 42 is formed between the supporting protrusions 41 and 41 of each pair so as to protrude forward. Each securing base 42 has an internally threaded hole 42a. Protrusions 43 are integrally formed with the panel supporting portion 11 at locations that are situated below the respective securing bases 42.

The second securing portion 22 of each connecting metallic plate 20 is mounted between the supporting protrusions 41 and 41 at the securing surface 11c of the panel supporting portion 11. Retaining portions 22c and 22c protruding towards the left and right are integrally formed with an end portion of each second securing portion 22. As shown in Fig. 1, the two pairs of retaining portions 22c and 22c are retained at top end surfaces of the two pairs of supporting protrusions 41 and 41. Here, each fitting hole 22b is fitted to the corresponding protrusion 43 to form a protrusion-and-recess fitting portion. Further, each securing screw 44 is inserted into the corresponding securing hole 22a, and is driven into the corresponding internally threaded hole 42a, so that each second securing portion 22 is firmly tightened and secured by a screw securing portion. The two pairs of supporting protrusions 41 and 41, the protrusions 43, the internally threaded holes 42a, the securing holes 22a, the fitting holes 22b, the two pairs of retaining portions 22c and 22c, and the securing screws 44 form second securing sections 40 for securing the second securing portions 22 to the front surface of the panel supporting portion 11.

Referring to Fig. 3, each connecting metallic plate 20 extends along the mounting surface 11a of the panel supporting portion 11 from the lower side of the base portion 12. Excluding the first securing sections 30 and the second securing sections 40, the connecting metallic plates 20 do not contact the supporting member 10, and are slightly separated from the supporting member 10 along a front surface of the supporting member 10. In particular, at a portion where the preferentially fracturing portion 14 is formed, each connecting metallic plate 20 is slightly separated from the curved portion 13 of the supporting member 13.

Referring to Fig. 3, when each connecting metallic plate 20 according to the first embodiment is mounted, the bend portion 24 is positioned closer to the corresponding first securing section 30 than the preferentially fracturing portion 14, and faces the lower side of the base portion 12.

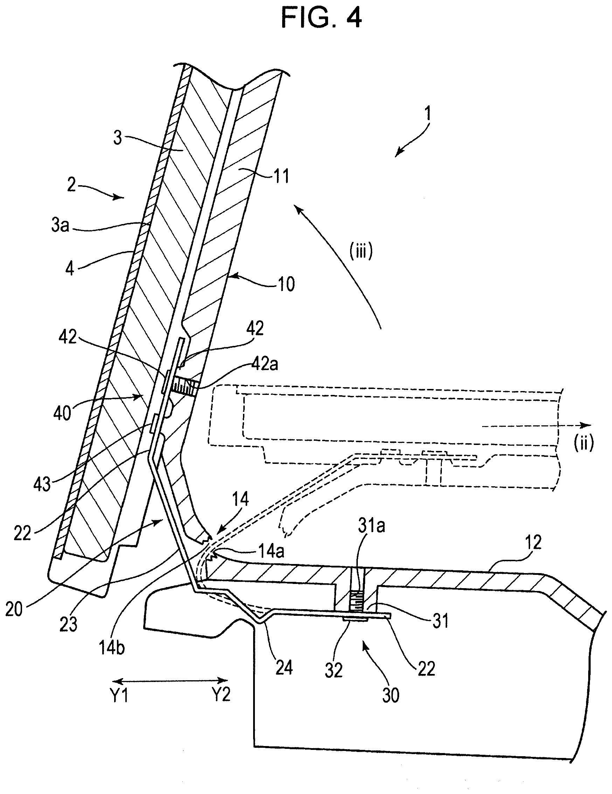

Fig. 4 shows states of actions when, from a front side, a large force acts upon the panel supporting portion 11 that supports the display panel 2.

When excessive shock acting in a direction (i) in Fig. 3 is applied to the panel supporting portion 11 of the supporting member 10 or the display panel 2 that is held by the panel supporting portion 11, the supporting member 10 is fractured along a fracture plane indicated by S-S at the preferentially fracturing portion 14 of the curved portion 13. When the supporting member 10 is fractured, the panel supporting portion 11 moves in a direction in which impact force acts, and falls to a position indicated by broken lines in Fig. 4. When the panel supporting portion 11 falls towards the position indicated by the broken lines in Fig. 4 from the position in Fig. 3, each connecting metallic plate 20 bends by a large amount in a clockwise direction around a fracture location of the preferentially fracturing portion 14 as a bending start position. At the same time, a force in a direction (ii) away from the separated base portion 12 acts upon the panel supporting portion 11.

When the force in the direction (ii) acts upon the panel supporting portion 11, the bend portions 24 of the respective connecting metallic plates 22 are stretched, so that the first securing sections 30 and the respective second securing sections 40 are capable of moving away in a direction along plate surfaces of the respective connecting metallic plates 20. Each bend portion 24 is stretched by a pulling force in the direction (ii). Therefore, it is possible to disperse stress that acts upon each connecting metallic plate 20, and to prevent each connecting metallic plate 20 from being cut.

As shown in Figs. 1 and 2, while, in each second securing section 40, the retaining portions 22c and 22c of the second securing portion 22 are caught by the supporting protrusions 41 and 41, and the fitting hole 22b of the second securing portion 22 and the protrusion 43 are fitted to each other in a protrusion-and recess fitted state, the second securing portion 22 is secured by the corresponding securing screw 44 and forms the corresponding screw securing portion. In each second securing section 40, since the second securing portion 22 is firmly secured to the panel supporting portion 11, even if the preferentially fracturing portion 14 is fractured and the force in the direction (ii) acts upon the panel supporting portion 11, the second securing portion 22 is not easily removed from the panel supporting portion 11.

The stretching of each bend portion 24 is an elastic deformation. Therefore, after each bend portion 24 has been stretched by the pulling force, each bend portion 24 is restored to its original shape. Depending upon the strength of the force in the direction (ii), each bend portion 24 may partly undergo plastic deformation. In either case, since each connecting metallic plate 20 is formed from a metallic plate that exhibits a strong elastic restoring force in the bending direction as a whole, by the elastic force of each connecting metallic plate 20, a large restoring force in a direction (iii) acts upon the panel supporting portion 11 that has fallen to the position indicated by the broken lines in Fig. 4, so that the panel supporting portion 11 can be restored to the raised position indicated by the solid line in Fig. 4.

By the elastic force of each connecting metallic plate 20, the panel supporting portion 11 is restored so as to be raised above a fracture surface 14a at a side of the base portion 12. Therefore, the fracture surface 14a of the side of the base portion that has been fractured at the preferentially fracturing portion 14 is prevented from being directly exposed. In addition, when the panel supporting portion 11 is restored to its raised position, a fracture surface 14b at a side of the panel supporting portion 11 faces downward, so that a portion of the panel supporting portion 11 that is situated forwardly from the fracture surface 14a and a lower end portion of the display panel 2 oppose each other. Therefore, it becomes easier to prevent the danger of the fracture surface 14b directly facing an occupant.

Referring to Fig. 3, in each connecting metallic plate 20 according to the first embodiment, the bend portion 24 is disposed closer to the corresponding first securing section 30 than the preferentially fracturing portion 14, and is positioned at the lower side of the base portion 12.

Therefore, when the supporting member 10 is fractured at the preferentially fracturing portion 14, the panel supporting portion 11 falls to the position indicated by the broken lines in Fig. 4, and a pulling force acts upon each connecting metallic plate 20, each connecting metallic plate 20 is bent and deformed in the clockwise direction while each connecting metallic plate 20 is stretched towards the front (direction Y1) at its corresponding bend portion 24. Therefore, when the connecting metallic plates 20 are to be elastically restored thereafter, while restoring forces are exerted towards the back (direction Y2) at the bend portions 24, restoring forces that cause the bend to be restored act upon the connecting metallic plates 20. Consequently, as shown in Fig. 4, the panel supporting portion 11 that has been fractured is restored to its raised position after moving closer to and returning to the base portion 12. As a result, the fracture surfaces 14a and 14b are less likely to face the interior of a vehicle.

Each bend portion 24 is positioned at the lower side of the base portion 12. Therefore, even if the elasticity of each bend portion 24 is reduced by a pulling force, since each bend portion 24 is positioned at the lower side of the base portion 12 and elastic restoring force can be exhibited at a portion of the metallic plate that exists forwardly from the corresponding bend portion 24 and that supports the panel supporting portion 11, the panel supporting portion 11 tends to be restored to its raised position.

Accordingly, in order to restore the panel supporting portion 11 to a state close to its original state at a location near the base portion 12, it is desirable to dispose each bend portion 24 closer to its corresponding first securing section 30 than the preferentially fracturing portion 14, and at the lower side of the base portion 12.

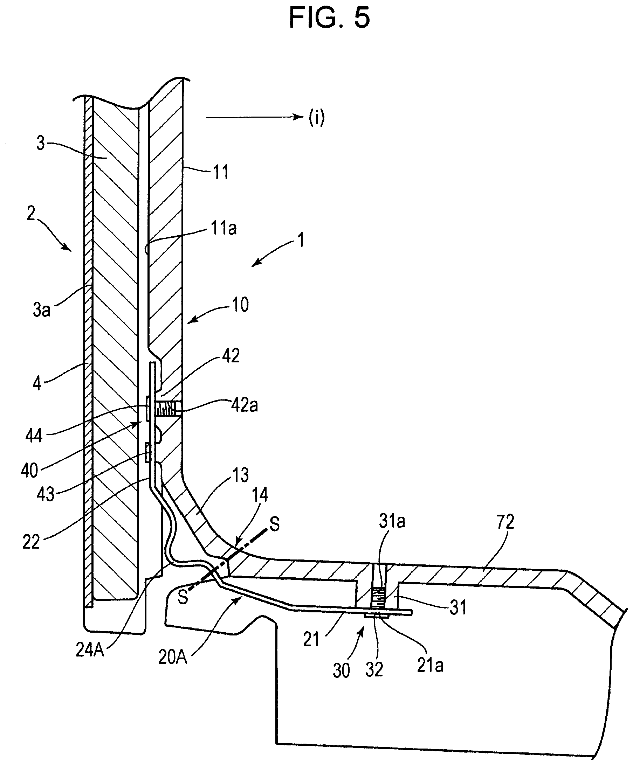

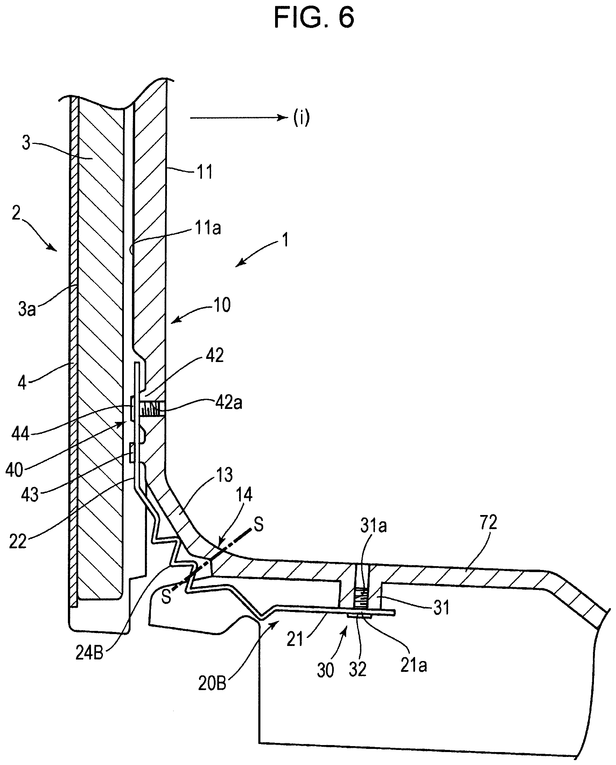

Figs. 5 and 6 show other embodiments of the present invention.

A connecting metallic plate 20A according to a second embodiment shown in Fig. 5 is such that its bend portion 24A is curved in a convex form. When the connecting metallic plate 20A is stretched, the shape of the bend portion 24A tends to be elastically restored to its original shape.

A connecting metallic plate 20B according to a third embodiment shown in Fig. 6 is such that its bend portion 24B has V-shaped bending portions that are repeatedly formed. When a stretching force acts upon the connecting metallic plate 20B, at the bend portion 24B, a separation distance between a first securing section 30 and a second securing section 40 can be increased, as a result of which the connecting metallic plate 20B is even less likely to be cut.

Combinations of the bend portions according to the embodiments may be used.

## Claims

1. A display device for a vehicle comprising a display panel (2) and a supporting member (10) on which the display panel (2) is mounted, the supporting member (10) including a panel supporting portion (11) that supports the display panel (2) and a base portion (12) that supports the panel supporting portion (11),
the supporting member (10) further includes a preferential fracturing portion (14) that is formed between the panel supporting portion (11) and the base portion (12), **characterized in that**
a connecting metallic plate (20) formed of a leaf spring metallic material and that extends from the base portion (12) to the panel supporting portion (11) is provided at the supporting member (10), and the connecting metallic plate (20) is secured to the base portion (12) at a first securing section (30), is secured to the panel supporting portion (11) at a second securing section (40), and is elastically deformable in a bending direction, and
the connecting metallic plate (20) includes a bend portion (24) that reduces a distance along a plate surface of the metallic plate (20) excluding the bend portion (24) between the first securing section (30) and the second securing section (40), and the connecting metallic plate (20) is separated from the supporting member (10) at a portion where the preferential fracturing portion (14) is formed.

2. The on-vehicle display device according to Claim 1, wherein, when a force in a direction that moves the first securing section (30) and the second securing section (40) away in a direction along a plate surface of the connecting metallic plate (20) acts, the bend portion (24) is configured to be stretched to allow a distance between the first securing section (30) and the second securing section (40) to increase.

3. The on-vehicle display device according to either Claim 1 or Claim 2, wherein the bend portion (24) is bent into a V shape.

4. The on-vehicle display device according to either Claim 1 or Claim 2, wherein the bend portion (24) is curved in a convex form.

5. The on-vehicle display device according to any one of Claims 1 to 4, wherein the bend portion (24) is formed closer to the first securing section (30) than the preferential fracturing portion (14).

6. The on-vehicle display device according to any one of Claims 1 to 5, wherein the second securing section (40) includes a screw securing portion where the connecting metallic plate (20) is secured to the panel supporting portion (11) and a protrusion-and-recess fitting portion where a protrusion (43) of the panel supporting portion (11) is fitted to a fitting hole (22b) of the connecting metallic plate (20).

## Patentansprüche

1. Anzeigevorrichtung für ein Fahrzeug, mit einer Anzeigetafel (2) und einem Abstützelement (10), an dem die Anzeigetafel (2) angebracht ist, wobei das Abstützelement (10) einen Tafelabstützbereich (11), der die Anzeigetafel (2) trägt, und einen Basisbereich (12) aufweist, der den Tafelabstützbereich (11) abstützt,
wobei das Abstützelement (10) ferner einen bevorzugten Bruchbereich (14) aufweist, der zwischen dem Tafelabstützbereich (11) und dem Basisbereich (12) gebildet ist,
**dadurch gekennzeichnet,**
**dass** eine metallische Verbindungsplatte (20), die aus einem metallischen Blattfedermaterial gebildet ist und sich von dem Basisbereich (12) zu dem Tafelabstützbereich (11) erstreckt, an dem Abstützelement (10) vorgesehen ist, und dass die metallische Verbindungsplatte (20) an dem Basisbereich (12) an einem ersten Befestigungsabschnitt (30) befestigt ist, an dem Tafelabstützbereich (11) an einem zweiten Befestigungsabschnitt (40) befestigt ist sowie in einer Biegerichtung elastisch verformbar, und
**dass** die metallische Verbindungsplatte (20) einen Biegungsbereich (24) aufweist, der eine Distanz entlang einer Plattenoberfläche der metallischen Platte (20) mit Ausnahme des Biegungsbereichs (24) zwischen dem ersten Befestigungsbereich (30) und dem zweiten Befestigungsbereich (40) vermindert, und
**dass** die metallische Verbindungsplatte (20) von dem Abstützelement (10) in einem Bereich separiert ist, in dem der bevorzugte Bruchbereich (14) gebildet ist.

2. An einem Fahrzeug vorgesehene Anzeigevorrichtung nach Anspruch 1,
wobei dann, wenn eine Kraft in einer Richtung wirkt, die den ersten Befestigungsbereich (30) und den zweiten Befestigungsbereich (40) in einer Richtung entlang einer Plattenoberfläche der metallischen Verbindungsplatte (20) voneinander weg bewegt, der Biegungsbereich (24) dazu ausgebildet ist, gedehnt zu werden, so dass eine Distanz zwischen dem ersten Befestigungsbereich (30) und dem zweiten Befestigungsbereich (40) größer werden kann.

3. An einem Fahrzeug vorgesehene Anzeigevorrichtung nach Anspruch 1 oder Anspruch 2,
wobei der Biegungsbereich (24) in eine V-Form gebogen ist.

4. An einem Fahrzeug vorgesehene Anzeigevorrichtung nach Anspruch 1 oder Anspruch 2,
wobei der Biegungsbereich (24) in einer konvexen Form gekrümmt ist.

5. An einem Fahrzeug vorgesehene Anzeigevorrichtung nach einem der Ansprüche 1 bis 4,
wobei der Biegungsbereich (24) näher bei dem ersten Befestigungsbereich (30) als der bevorzugte Bruchbereich (14) ausgebildet ist.

6. An einem Fahrzeug vorgesehene Anzeigevorrichtung nach einem der Ansprüche 1 bis 5,
wobei der zweite Befestigungsbereich (40) einen Schraubenbefestigungsbereich aufweist, an dem die verbindende Metallplatte (20) an dem Tafelabstützbereich (11) befestigt ist, sowie einen Vorsprung-/Vertiefungs-Passbereich aufweist, an dem ein Vorsprung (43) des Tafelabstützbereichs (11) in eine Passöffnung (22b) der metallischen Verbindungsplatte (20) gepasst ist.

## Revendications

1. Dispositif d'affichage destiné à un véhicule comprenant un panneau d'affichage (2) et un élément (10) faisant office de support sur lequel est monté le panneau d'affichage (2), l'élément (10) faisant office de support comprenant une portion de support de panneau (11) qui supporte le panneau d'affichage (2) et une portion de base (12) qui supporte la portion de support de panneau (11) ;
l'élément (10) faisant office de support comprend en outre une portion de fracturation préférentielle (14) qui est formée entre la portion de support de panneau (11) et la portion de base (12), **caractérisé en ce que**
une plaque métallique de liaison (20) constituée d'un matériau métallique de ressort à lame et qui s'étend à partir de la portion de base (12) en direction de la portion de support de panneau (11) est prévue sur l'élément (10) faisant office de support, et la plaque métallique de liaison (20) est fixée à la portion de base (12) à un premier tronçon de fixation (30), est fixée à la portion de support de panneau (11) à un second tronçon de fixation (40) et est élastiquement déformable dans une direction de flexion ; et
la plaque métallique de liaison (20) comprend une portion recourbée (24) qui réduit une distance s'étendant le long d'une surface de plaque concernant la plaque métallique (20), à l'exclusion de la portion recourbée (24) entre le premier tronçon de fixation (30) et le second tronçon de fixation (40), et la plaque métallique de liaison (20) est séparée de l'élément (10) faisant office de support à une portion dans laquelle la portion de fracturation préférentielle (14) est réalisée.

2. Dispositif d'affichage embarqué selon la revendication 1, dans lequel, lorsqu'une force s'exerce dans une direction qui écarte le premier tronçon de fixation (30) et le second tronçon de fixation (40) dans une direction s'étendant le long d'une surface de plaque concernant la plaque métallique de liaison (20), la portion recourbée (24) est configurée pour être étirée afin de permettre une augmentation d'une distance entre le premier tronçon de fixation (30) et le second tronçon de fixation (40).

3. Dispositif d'affichage embarqué selon l'une quelconque des revendications 1 ou 2, dans lequel la portion recourbée (24) est recourbée pour prendre une configuration en forme de V.

4. Dispositif d'affichage embarqué selon l'une quelconque des revendications 1 ou 2, dans lequel la portion recourbée (24) est recourbée pour prendre une configuration de forme convexe.

5. Dispositif d'affichage embarqué selon l'une quelconque des revendications 1 à 4, dans lequel la portion recourbée (24) est réalisée pour être plus proche du premier tronçon de fixation (30) que de la portion de fracturation préférentielle (14).

6. Dispositif d'affichage embarqué selon l'une quelconque des revendications 1 à 5, dans lequel le second tronçon de fixation (40) englobe une portion de fixation par vissage dans laquelle la plaque métallique de liaison (20) est fixée à la portion de support de panneau (11) et une portion d'insertion du type à protrusion-et-évidement dans laquelle une protrusion (43) de la portion de support de panneau (11) vient s'insérer dans un trou d'insertion (22b) de la plaque métallique de liaison (20).
